# EUROPÄISCHE PATENTSCHRIFT

(11) **EP 2 822 762 B1**
(45) Veröffentlichungstag und Bekanntmachung des Hinweises auf die Patenterteilung: **29.05.2019**
(21) Anmeldenummer: 13706515.7
(22) Anmeldetag: 26.02.2013
(51) Int. Cl.: B32B 27/08, B32B 27/12, B29C 70/08, B29C 70/44, B29C 70/46, B29C 70/84, B29C 43/14

(54) **VERFAHREN ZUM HERSTELLEN VON BAUTEILEN AUS FASERVERSTÄRKTEM VERBUNDWERKSTOFF**
METHOD FOR PRODUCING COMPONENTS FROM FIBRE-REINFORCED COMPOSITE MATERIAL
PROCÉDÉ DE FABRICATION D'ÉLÉMENTS EN MATÉRIAU COMPOSITE RENFORCÉ DE FIBRES

(30) Priorität: 09.03.2012 CH 336122012
(43) Veröffentlichungstag der Anmeldung: 14.01.2015
(73) Patentinhaber: Mubea Carbo Tech GmbH, 5020 Salzburg (AT)
(72) Erfinder: WAGNER, Karl, A-5020 Salzburg (AT); SCHMITZ, Sebastian, A-5020 Salzburg (AT)
(74) Vertreter: Rentsch Partner AG
(86) Internationale Anmeldenummer: PCT/EP2013/053811
(87) Internationale Veröffentlichungsnummer: WO 2013/131781

(56) Entgegenhaltungen:
- WO-A1-2009/071118
- DE-A1- 10 258 630
- DE-A1- 10 309 811
- US-A1- 2004 018 350

## Beschreibung

Die Erfindung liegt auf dem Gebiet der Verfahren zur Herstellung von Bauteilen aus Verbundwerkstoffen.

Die Verwendung von Verbundwerkstoffen ermöglicht die Herstellung von Bauteilen mit hoher Festigkeit und hoher Steifigkeit bei einem im Vergleich zu anderen Werkstoffen geringem Gewicht. Gleichzeitig verfügen insbesondere faserverstärkte Verbundwerkstoffe über ein einzigartiges charakteristisches Aussehen, das als ästhetisch ansprechend wahrgenommen und als ein für hochwertige Verbundbauteile notwendiges Merkmal gilt.

DE102008035918A1 der Fa. Bayer MaterialScience und der Fa. Webasto AG wurde 2008 publiziert und beschreibt ein Verfahren zur Herstellung eines Verbundbauteils. Dabei werden ein Dekorverbund und ein die Stabilität erhöhender Strukturverbund räumlich getrennt voneinander hergestellt und anschliessend mittels einer Verbindungsschicht zusammengefügt. Durch den getrennten Aufbau und die Aushärtung der beiden Verbundteile soll unter anderem die Fertigungsdauer verkürzt werden können. Der Dekorverbund besteht aus wenigstens einer Trägerschicht sowie mindestens einer farbgebenden Schicht. Der Strukturverbund besteht aus mindestens einer Deckschicht und einem Distanzhalter. Der Dekorverbund ist nicht Teil der tragenden Struktur sondern dient dekorativen Zwecken.

US7846366B2 der Fa. GM Global Tech Operations Inc. wurde 2008 publiziert und beschreibt ein Formpressen (Compression Molding) von dekorativen Blenden aus faserverstärkten Verbundwerkstoffen. Dazu werden Fasermatten in einem ersten Schritt zusammen mit einem härtenden Harz in ein erstes Formwerkzeug gelegt und bei geschlossenem Werkzeug unter Druck- und Hitzeeinfluss vorgeformt sowie teilweise ausgehärtet. Anschliessend wird das Bauteil in einem zweiten Formwerkzeug bei höherem Druck und höheren Temperaturen in die endgültige Form gebracht und voll ausgehärtet. Dabei verfügt das zweite Formwerkzeug für die Ausformung der Bauteiloberfläche über eine höhere Oberflächengüte als das erste Formwerkzeug. Die Fasern sind von aussen sichtbar.

US4587160 der Fa. Ferro Corporation wurde 1986 publiziert und befasst sich mit der Herstellung von oberflächenbeschichteten Kunststoffteilen. Ein elektrisch leitfähiger Lack wird elektrostatisch haftend auf die Oberfläche einer heissen Form aufgebracht. Anschliessend wird Kunststoff in die Form eingebracht, die Form geschlossen und die Oberflächenschicht gemeinsam mit dem Kunststoff ausgeformt.

EP0365414B1 der Fa. Hutchinson wurde 1990 veröffentlicht und beschreibt ein Verfahren zur Erzeugung eines Karosserieteils für Kraftfahrzeuge. Dabei wird erst ein flüssiger Lack auf die Wände einer Gussform aufgetragen. Es ist insbesondere die Verwendung eines elektrisch leitenden und sich selbständig von der Oberflächenschicht lösenden Lacks vorgesehen, um später optional noch elektrostatische Pulverbeschichtungen durchführen zu können. Anschliessend wird ein Verstärkungselement, beispielsweise eine Glasfasermatte, in die Form eingelegt und ein polymerisierendes Material eingespritzt, das als Matrix für das Verstärkungselement dient und sich gleichzeitig mit der Lackschicht verbindet. Auf diese Weise soll die Fertigung von Bauteilen hoher Oberflächengüte möglich sein.

EP1043138B1 (resp. US6235228B1) der Firma Morton International Inc. wurde 2000 veröffentlicht und beschreibt ein Verfahren zum Beschichten eines geformten Gegenstandes. Dazu wird eine hitzehärtende pulverförmige Mischung aus einem ungesättigten Polyesterharz, einem vernetzenden Vorpolymer und einem Wärmeinitiator auf die Oberfläche eines Formwerkzeugs aufgebracht. Anschliessend wird die mit dem Pulver beschichtete Oberfläche des Formwerkzeugs erwärmt, was zur Umwandlung des Pulvers in einen zusammenhängenden, die Formwerkzeugoberfläche bedeckenden Film führt und schliesslich zu einer Aushärtung desselben führt. Alternativ wird das Formwerkzeug auch vor dem Aufbringen der pulverförmigen Mischung erhitzt, so dass sich die pulverförmige Mischung beim Auftreffen auf die Oberfläche verflüssigt. Anschliessend wird im Formwerkzeug auf der ausgehärteten Pulverbeschichtung der eigentliche Bauteilkörper aufgebaut. Es können ein optional mit Glasfasern vermischtes Füllharz oder auch Schichten von Glasfasermatten zur Anwendung kommen. Nach Aushärten des Bauteilkörpers ist dieser integral mit der Pulverbeschichtung verbunden und wird aus dem Formwerkzeug entnommen.

WO10008599A1 der New England Catalytic Technologies Inc. wurde 2010 veröffentlicht und beschreibt ein Verfahren zur formapplizierten Pulverbeschichtung. Dieses soll eine gleichmässige formapplizierte Pulverbeschichtung eines grossen Bauteils ermöglichen, ohne dass das verwendete Formwerkzeug vor dem Einbringen des Beschichtungspulvers über dessen Schmelzpunkt erhitzt werden muss. Die Oberfläche der verwendeten Kavität ist elektrisch leitend und geerdet. Die Oberflächenbeschichtung wird erzeugt, indem das Oberflächenbeschichtungspulver gleichzeitig mit einem elektrisch leitenden und hauptsächlich Kohlefasern enthaltenden faserartigen Medium und einem optionalen faserartigen Verstärkungsmedium auf die Kavitätenwand aufgebracht wird, wobei das elektrisch leitende Medium in elektrischem Kontakt mit der elektrisch leitenden Oberfläche der Kavität ist. Die aufgebrachte Oberflächenbeschichtung wird anschliessend erwärmt, um eine Wärmeaushärtung zu erreichen und mit einem Druck beaufschlagt.

WO08061661A1 der Fa. Novation S.p.A. wurde 2008 veröffentlicht und beschreibt ein Fertigungsverfahren für Bauteile aus faserverstärkten Kunststoffen. Beim Verfahren wird erst ein geformter Grundkörper erzeugt, indem in einer geschlossenen Form ein warmhärtendes Matrixsystem in eine erste Faserart injiziert und ausgehärtet wird (resin transfer moulding, fortan RTM). Nach der Entformung wird wenigstens eine Schicht eines vorimprägnierten Faserzeugs (sogenanntes Prepreg) auf den geformten Grundkörper als mechanische Verstärkung auflaminiert und ausgehärtet, wodurch es zu einer festen Verbindung zwischen dem Grundkörper dem Prepreg kommt. Durch den Gebrauch einer auf die Bauteiloberfläche gelegten optionalen thermoplastischen Folie in Verbindung mit dem Prepreg im Bereich der sichtbaren Bauteiloberfläche kann eine Oberflächengüte erreicht werden, die jener eines ausschliesslich auf Prepregs aufgebauten und autoklavierten Bauteils entspricht.

WO03080310A1 der Fa. Menzolit Fibron GmbH wurde 2003 veröffentlicht und beschreibt ein Verfahren zu Herstellung eines lackierten faserverstärkten Bauteils. Dazu wird eine Folie, mit der für das Bauteil gewünschten Oberflächenbeschaffenheit und optional Farbgebung in einem Formwerkzeug vorgeformt. Anschliessend werden in einem Formwerkzeug Verstärkungslagen aus faserverstärktem Kunststoff auf die Seite der Folie gelegt, welche nicht als Bauteiloberfläche vorgesehen ist. Mittels Aushärtung eines duroplastischen Matrixsystems oder Aufschmelzen und folgendem Abkühlen einer Thermoplastischen Matrix wird anschliessend das herzustellende Bauteil geformt.

EP1885547B1 der Fa. Mubea Carbo Tech GmbH wurde 2006 veröffentlicht und beschreibt ein Verfahren zur Herstellung eines beschichteten Verbundproduktes. Dazu wird in einem Hilfsformwerkzeug eine folienartige Grundform hergestellt, die wenigstens teilweise der Oberflächenform des herzustellenden Bauteils entspricht. Anschliessend wird diese Grundform aus dem Hilfsformwerkzeug entformt und Verstärkungslagen werden darauf aufgebracht. Die Grundform wird anschliessend zusammen mit den Verstärkungslagen in ein Produktionswerkzeug übertragen, wo die Verstärkungslagen durch ein Matrixsystem verbunden und dann ausgehärtet werden. Daraufhin wird die Grundform mit den Verstärkungslagen entformt und kann nachbearbeitet werden. Der Grundform können gemäss der Patentschrift unterschiedliche Funktionen zukommen, so kann sie etwa eine qualitativ hochwertige Bauteiloberfläche darstellen, Splitterschutz bieten, die Oberfläche des Produktionswerkzeugs vor Beschädigungen bewahren oder abziehbar sein und die Oberfläche des Bauteils bis zur Nachbearbeitung vor Verschmutzung schützen.

WO2009/071118A1 der Fa.Carbo Tech Composites GmbH wurde 2009 veröffentlicht und beschreibt ein Verfahren und eine Vorrichtung zur Herstellung von Bauteilen aus Faserverbundwerkstoffen, insbesondere hohle Teile oder Teile mit Hinterschnitten. Dabei werden geeignete, dreidimensional vorgeformte, ein oder mehrlagige zumindest bereichsweise hohle Blaskerne eingesetzt, welche ausserhalb der eigentlichen Produktionsform einerseits als Belegewerkzeug für die zu verarbeitenden Trockenfasern und/oder Prepregs und andererseits während dem eigentlichen Verarbeitungsprozess bei dem die Fasern verbunden werden, als Druckmembran dienen. Die als Hilfswerkzeuge verwendeten Blaskerne werden in der Regel ausserhalb des Werkzeuges mit Fasern belegt, umwickelt oder umflochten. Anschliessend werden die Fasern zusammen mit dem Blaskern in eine Kavität einer ein oder mehrteiligen Produktionsform eingebracht. Danach wird das Werkzeug geschlossen und eine Harz-Härter Mischung aus einer Misch- und Dosieranlage zwischen die Aussenwand der Kavität und des Blaskerns injiziert, derart, dass die Fasern durchtränkt werden. Durch das Erzeugen einer Druckdifferenz werden die Fasern gegen die Aussenwand der Kavität gepresst, so dass das im Wesentlichen durch die Fasern gebildete Bauteil seine endgültige Geometrie erhält.

DE10258630A1 der Fa. DaimlerChrysler AG wurde 2004 veröffentlicht und beschreibt ein Verfahren zur Herstellung langfaserverstärkter, thermoplastischer Bauteile, wobei eine flächige Struktur bestehend aus Langfasern mit einem thermoplastischen Kunststoff in einem Formgebungsschritt zusammengebracht wird. Dabei wird eine Faserstruktur, das heißt ein Gelege oder Gewirke von verbundenen Fasern, in einer Kavität eines mindestens zweiteiligen Formwerkzeuges positioniert und anschließend im Wesentlichen ohne hohen Druck ein flüssiges thermoplastisches Kunststoffmaterial bei teilgeöffnetem Formwerkzeug in die Kavität eingebracht. Anschließend wird durch Zusammendrücken der Formhälften des Formwerkzeuges eine im Wesentlichen gleichmäßige Druckbeaufschlagung zur Verbindung und Formgebung der Fasermatte und des Kunststoffes zur Herstellung eines Bauteils erreicht.

US2004/0018350A1 wurde 2004 veröffentlicht und beschreibt ein Verbundteil bestehend aus einem ausgehärteten Harz-Faser-Komposit, welches integral mit einer Lackfolie verbunden wird, sowie ein Verfahren zur Herstellung eines solches Verbundteils. Dabei wird die Lackfolie, die eine Verbundseite und eine Abschlussseite aufweist, in einer Kavität einer Form installiert. Eine Mischung aus duroplastischem Harz und einer Vielzahl von verstärkenden Fasern wird anschliessend in die Kavität eingeführt und unter Erwärmung mit der Verbundseite der Lackfolie verbunden.

DE10309811A1 der Fa. Menzolit-Fibron GmbH wurde 2003 veröffentlicht und beschreibt ein Verfahren zur Veredelung von Oberflächen von Bauteilen aus faserverstärkten Kunststoffen sowie ein solcherart hergestelltes Bauteil. Dabei wird eine bereits die gewünschten Eigenschaften hinsichtlich der Beschaffenheit und gegebenenfalls der Farbgebung der Oberfläche des Bauteils aufweisende Kunststofffolie, die entsprechend der Topographie der Oberfläche des Bauteils vorgeformt ist, in eine den Bauteilabmessungen entsprechende Form eingelegt. Anschliessend wird ein faserverstärkter Kunststoff, vorzugsweise mit einer Duroplast- oder Thermoplast-Matrix, mit einem auf die Zusammensetzung des Halbzeugs abgestimmten Verfahren auf die Seite der vorgeformten Folie aufgebracht, die nicht die Oberfläche ist. Nach dem Aushärten oder Abkühlen des faserverstärkten Kunststoffs wird schliesslich das fertige Bauteil der Form entnommen.

Bei differenzierten Produktionsketten wird aus betriebswirtschaftlichen Gründen traditionellerweise angestrebt jeweils nach jeder Produktionsstufe fehlerhafte Zwischenprodukte auszuscheiden, damit diese in folgenden Produktionsstufen keine unnötigen weiteren Anlagen-, Lohn- und Materialkosten verursachen und dadurch eine tiefe Ausschussrate am Ende der Produktionskette zu erhalten. Bei der Herstellung von Verbundbauteilen gestaltet sich ein derartiges Vorgehen zur Reduktion der Ausschussraten am Ende von Produktionskette aber oft als schwierig. Ein Hauptgrund dafür ist, dass bei der Fertigung von hochwertigen Verbundbauteilen in der Regel eine sogenannte Integralbauweise angestrebt wird. Bei diesem Fertigungskonzept wird versucht, möglichst viele funktionale Elemente eines Produkts gleichzeitig in einem einzigen Fertigungsvorgang herzustellen, um beispielsweise die späteren Montagekosten zu senken. Zusätzlich ermöglicht dieses Konzept beispielsweise bei Spritzpressverfahren (sogenanntem resin transfer moulding, fortan RTM genannt) eine kostengünstige Herstellung qualitativ hochwertiger Bauteile mit guter Reproduzierbarkeit in Mittel- und Grossserien. Da dadurch im Vergleich zu konventionellen (differenzierten) Bauweisen jedoch eine Mehrzahl von Fertigungsstufen wegfällt, bedeutet dies auch, dass keine sukzessiven Kontrollen von Zwischenprodukten mehr möglich sind. Zwar kann das Risiko, dass in einem solchen integrierten Verfahrensschritt ein fehlerhaftes Bauteil erzeugt wird durch eine Vielzahl von Massnahmen gesenkt werden, jedoch steigen damit auch die Fertigungskosten, weshalb normalerweise ein Kompromiss zwischen Risikominimierung und Zusatzkosten gefunden werden muss.

Besonders problematisch sind dabei Klassen von Fehlern, die nicht korrigiert werden können und zugleich weder effizient verhindert, noch vor dem Abschluss des Verfahrensschritts festgestellt werden können. Dazu gehören insbesondere Unregelmässigkeiten im Bereich der Bauteiloberflächen, wovon mehrere Arten bekannt sind. Beispielsweise lokale Unterschiede in den Dicken der Oberflächenlackierung. Diese bewirken einen unregelmässigen Oberflächenglanz und können dazu führen, dass Verstärkungsfasern durch die Lackoberfläche dringen. Eine zweite Art ist aus der Verwendung duroplastischer Matrixsysteme bekannt. Bei diesen können während der Aushärtung Gase entstehen, die beim fertigen Bauteil als Bläschen innerhalb der Matrix oder als kleine Löcher (sogenannte Pinholes) auf der Bauteiloberfläche sichtbar sind. Eine dritte Art ist das ungewollte Entstehen von grösseren Poren beim Einleiten von flüssigen Matrixsystemen in Kavitäten. Eine vierte Art stellen Unregelmässigkeiten in der Anordnung der Fasern dar. Bekannt sind unter anderem ungleichmässige Drapierungen von flächigem Halbzeug, insbesondere bei Geweben, und die ungewollte Verschiebung von Fasern beim Einleiten von Matrixsystemen, insbesondere bei RTM, Faltenbildung.

In einigen Fällen ist es möglich, kleinere Fehler in der Bauteiloberfläche etwa durch Abschleifen und/oder Neulackieren der Oberflächenlackierung zu beheben. Solche Nachbearbeitungen sind aber gerade bei Mittel- und Grossserien kaum wirtschaftlich und zudem entspricht die Güte der erhaltenen Oberflächen in vielen Fällen nicht den ästhetischen Anforderungen, welche die Endabnehmer an das Bauteil stellen. Weiterhin sind individuelle Nacharbeiten mit hohen Kosten und grossem Zeitaufwand verbunden. Aus Herstellersicht problematisch ist dies vor allem auch deshalb, weil dieses Ausscheiden von Bauteilen aufgrund von Mängeln in ihrer Oberflächenbeschaffenheit erst geschieht, nachdem bereits ein grosser Teil der Produktionskosten angefallen sind. Dies verteuert nicht nur direkt die Kosten pro fehlerfreies Bauteil, sondern vermindert auch die Produktionskapazitäten. Die Entsorgung fertiger Bauteile nur aufgrund kleiner Unregelmässigkeiten in der Oberflächenstruktur ist deshalb auch aus ökologischer Sicht problematisch.

Es ist deshalb ein Ziel der vorliegenden Erfindung, ein Verfahren zur Herstellung von Bauteilen aus Faserverbundwerkstoffen aufzuzeigen, mit welchem die Qualität verbessert und die Ausschussrate reduziert werden können.

Bei einer Ausführungsform eines erfindungsgemässen Verfahrens wird die Herstellung des Bauteilkörpers aufgeteilt in eine Fertigung mindestens eines ersten Teils, welches für die optische Erscheinung des Bauteils relevante Sichtflächen umfasst, und mindestens eines zweiten Teils, welches alleine oder im Verbund mit dem mindestens einen ersten Teil für die Stabilität des Bausteils zuständig ist (Trägerstruktur). Zwischen diesen beiden Verfahrensschritten besteht die Möglichkeit, die Sichtflächen einer eingehenden Kontrolle zu unterziehen. Zu diesem Zweck kann das erste Teil aus einer Produktionsform entnommen werden.

Im Unterschied zu einer herkömmlichen Fertigung, bei welcher die Herstellung eines Bauteils integriert erfolgt und erst nach der Fertigstellung des Bauteils eine Kontrolle der Sichtflächen möglich ist, ermöglicht das erfindungsgemässe Verfahren ein wesentlich früheres Eingreifen, bzw. Korrigieren, indem die Sichtfläche weitgehend getrennt von der Trägerstruktur hergestellt wird. Eine Verbindung zu einem tragenden Teil erfolgt erst zu einem späteren Zeitpunkt. Das erste Teil wird mit Vorteil als vergleichsweise dünnes Teil ausgestaltet, welches ein wenig Material umfasst. Ein weiterer Vorteil besteht darin, dass aufgrund der in der Regel vergleichsweise geringen Masse ein schnelles Aufheizen und Abkühlen möglich ist, was sich positiv auf die Produktionseffizienz auswirken kann.

In der Regel wird das erste Teil in einer Kavität eines Formwerkzeuges hergestellt. Dabei werden eine oder mehrere später direkt oder indirekt eine Sichtfläche bildende Faserlage direkt auf eine Wand der Kavität aufgebracht. Die Faserlage kann ein- oder mehrschichtig aufgebaut sein und mit einer Matrix imprägniert (Prepreg) und/oder trocken eingebracht werden. Alternativ oder in Ergänzung kann die Wand der Kavität vor dem Aufbringen der Faserlage auch beschichtet werden. Z.B. besteht die Möglichkeit, die Wand der Kavität mit einem Lack zu versehen, der sich später mit der Faserlage wirkverbindet. Die Beschichtung kann vor dem Einlegen der Fasern zumindest teilweise ausgehärtet werden. Vor dem Einlegen der Faserlage kann die Beschichtung zudem weiteren Bearbeitungsschritten unterzogen werden. Weiterhin besteht die Möglichkeit, die Wand der Kavität mit einer Materialschicht zu bedecken, bevor die Faserlage aufgebracht wird. Die Materialschicht kann z.B. aus einer vorgeformten (thermoplastischen) Kunststofffolie bestehen. Die Kunststofffolie kann am Bauteil verbleiben oder später wieder von diesem gelöst werden.

Das erste Teil weist nach der Herstellung in der Regel nur beschränkte strukturtragende Eigenschaften auf, die so gewählt werden, dass das erste Teil ohne Beschädigung gehandhabt werden kann, z.B. um eine Qualitätskontrolle der Sichtflächen oder andere Behandlungen durchführen zu können. Nachdem das erste Teil eine ausreichende Strukturstabilität aufweist, wird es (falls erforderlich) aus dem Formwerkzeug entnommen und z.B. seine Sichtflächen auf Fehler überprüft. Genügt dieses Zwischenprodukt definierten Anforderungen, insbesondere solchen bezüglich seiner optischen Erscheinung, so verbleibt es im Fertigungsprozess und wird in einem oder mehreren nachfolgenden Fertigungsschritten mit einer Trägerstruktur wirkverbunden, um seine mechanische Festigkeit zu erhöhen.

In einem erfindungsgemässen Verfahren wird folglich entgegen der üblichen Praxis absichtlich auf eine integrierte Fertigung des Bauteilkörpers verzichtet. Durch diese erfindungsgemässe Differenzierung kann die risikobehaftete Fertigung der Oberflächenstruktur des Erzeugnisses von der restlichen Fertigung getrennt werden. Einerseits erlaubt diese Trennung eine effiziente Senkung des Risikos von Unregelmässigkeiten in der Oberflächenstruktur. Denn es kann ein nur für die Herstellung der Oberflächenstruktur optimiertes Fertigungsverfahren verwendet werden. Andererseits erlaubt diese Differenzierung auch eine frühzeitige Kontrolle der Oberflächengüte und ermöglicht damit das Ausscheiden fehlerhafter Oberflächenstrukturen vor der Fertigstellung des Erzeugnisses. Es hat sich gezeigt, dass auf diese Weise sowohl die Fertigungskosten für das Erzeugnis als auch Ausschussvolumina gesenkt und gleichzeitig die Oberflächengüte der Erzeugnisse gesteigert werden konnte.

Ein erfindungsgemässes Verfahren weist gegenüber herkömmlichen Verfahren insbesondere folgende Vorteile auf:
a) Die Ausschussrate von Bauteilen am Ende der Produktionskette kann reduziert werden, was sowohl die Fertigungskosten als auch die ökologische Belastung der Produktion reduziert.
b) Die Taktzeiten in teuren mass-, form- und oberflächengenauen Kavitäten können bei Bedarf reduziert werden.
c) Dimensionsänderungen des Bauteils während der Fertigung, insbesondere durch Schrumpfung, können bei Bedarf berücksichtigt und kompensiert werden.
d) Die Bildung einer formapplizierten Oberflächenschicht auf dem Bauteil ermöglicht eine effiziente Verwendung von Folien oder Pulverbeschichtungen, was zu einer bedeutenden Verbesserung der Arbeitshygiene im Vergleich zur Verwendung von Flüssiglacken führt.
e) Das Verfahren erlaubt eine individuelle Anpassung von Bauteilen auf Kundenwünsche bei standardisierter hoher Oberflächengüte.
f) Das Verfahren eignet sich auch zur Funktionsintegrationen, insbesondere etwa von Hinterschäumungen zur Wärme- und Schallisolation.

In einer Ausführungsform umfasst ein erfindungsgemässes Verfahren zur Herstellung eines faserverstärkten Bauteils folgende Verfahrensschritte: (a) Bereitstellen eines Formwerkzeugs mit einer formgebenden Kavität; (b) Falls erforderlich, Aufbringen einer Oberflächenschicht auf mindestens eine Wand der Kavität, so dass diese temporär an dieser haftet; (c) Direktes oder indirektes Aufbringen einer ersten Faserlage auf die temporär an der Kavitätenwand haftende Oberflächenschicht; (d) Wirkverbinden der Oberflächenschicht und der ersten Faserlage, sowie Aushärten der ersten Faserlage; (e) Ablösen der Oberflächenschicht von der Kavitätenwand; (f) Entnahme eines aus der ersten Faserlage und der damit wirkverbundenen Oberflächenschicht bestehenden Zwischenprodukts aus der Kavität; (g) Kontrolle des Zwischenprodukts, z.B. auf Fehlstellen oder andere Kriterien; (h) Einbringen des kontrollierten Zwischenprodukts in dieselbe oder eine andere Kavität; (i) Aufbringen einer Trägerstruktur auf das Zwischenprodukt; (j) Wirkverbinden des Zwischenprodukts mit der Trägerstruktur; (k) Entnahme des fertigen Bauteils aus der Kavität. Die Kavität des verwendeten Formwerkzeugs kann über eine elektrisch leitende Oberfläche verfügen, welche die temporäre Haftung der Oberflächenbeschichtung verbessert. Die Oberflächenbeschichtung kann mehrschichtig aufgebaut werden. Mindestens eine der in der Form applizierten Lagen der Oberflächenschicht kann über eine andere Färbung als die erste Lage verfügen. Wenigstens eine Lage der Oberflächenschicht kann vor dem Einbringen in die Kavität ein Pulver sein. Wenigstens eine Lage der Oberflächenschicht kann dem Einbringen in die Kavität eine Flüssigkeit sein. Falls gewünscht, kann eine Lage der Oberflächenschicht nicht durchgehend ausgestaltet sein. Der Aggregatszustand der Oberflächenschicht kann vor dem Einlegen der ersten Faserlage durch elektromagnetische Strahlung wenigstens zeitweise geändert werden. Die Trägerstruktur kann ein Faserverbundbauteil sein und/oder aus einem homogenen Polymer, z.B. durch Spritzgiessen, hergestellt werden. Die Oberflächenschicht kann von der Kavitätenwand schonend abgelöst werden, indem ein Gas und/oder eine Flüssigkeit zwischen die Oberflächenschicht und die Kavitätenwand eingeleitet wird. Die Kontrolle kann eine direkte oder eine indirekte Sichtprüfung sein. Je nach Anwendungsgebiet kann die Faserlage aus Kohlefasern und/oder Glasfasern und/oder Aramidfasern und/oder Polymerfasern und/oder Metallfasern und/oder Naturfasern und/oder Synthesefasern gebildet werden. Die Faserlagen können durch Aushärten eines Matrixsystems fixiert werden, das zwischen die Fasern injiziert wird oder bereits dort vorhanden ist. Bei Bedarf kann die Oberflächenschicht vor dem Einlegen der ersten Faserlage zumindest teilweise ausgehärtet werden. Je nach Anwendungsgebiet kann die Trägerstruktur als Faserverbundbauteil aufgebaut werden und aus einer oder mehreren Faserlagen bestehen. Die Trägerstruktur kann die Tragfähigkeit erhöhende Elemente/Mittel aufweisen, z.B. in Form von Verstärkungsrippen, die integral ausgebildet oder nachträglich wirkverbunden werden. Die Trägerstruktur kann bei Bedarf Bereiche aus Schaumstoff und/oder Waben umfassen, welche der Erhöhung der Tragfähigkeit oder zur Absorption von kinetischer Energie z.B. bei einem Unfall dienen. Die Trägerstruktur kann zumindest einen Bereich aus homogenem Kunststoff umfassen, der z.B. durch Spritzgiessen hergestellt wird. Die Trägerstruktur wird vorteilhafterweise durch Verkleben mit dem Zwischenprodukt wirkverbunden. Weitere Aspekte der Erfindung werden anhand der in den nachfolgenden Figuren beschriebenen Ausführungsform näher erläutert. Es zeigen:
- Fig. 1: ein erfindungsgemässes Verfahren;
- Fig. 2: zeigt schematisch einen Querschnitt durch ein nach dem erfindungsgemässen Verfahren hergestellten Erzeugnisses.

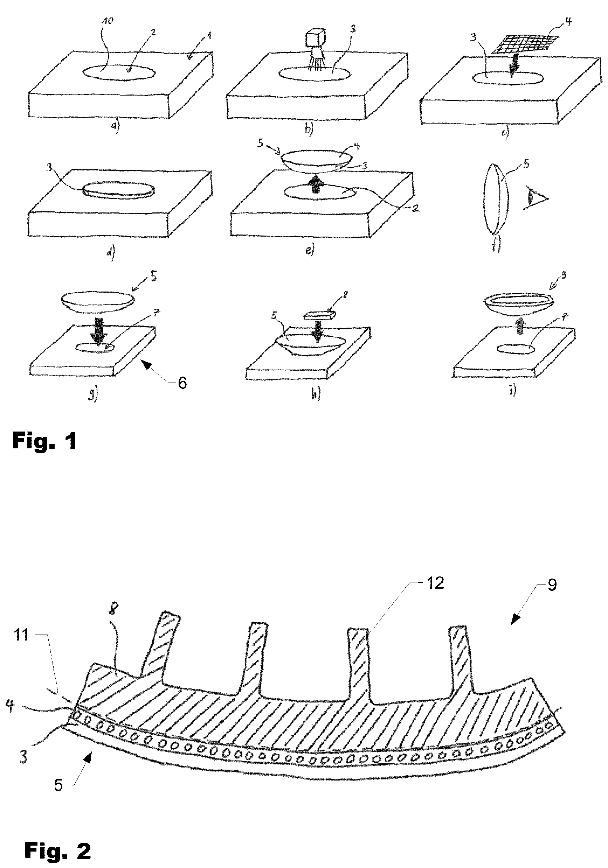

Ein erfindungsgemässes Verfahren wird nachfolgend mit Bezug auf **Figur** 1 näher erläutert. Vereinfacht dargestellt umfasst das dargestellte erfindungsgemässe Verfahren folgende Verfahrensschritte: In einem ersten Schritt (vgl. Figur 1a) wird ein Formwerkzeug 1 mit einer Kavität 2 bereitgestellt. Die Kavität 2 weist eine formgebende Wand 10 auf.

Bei Bedarf wird, wie in **Figur 1b** dargestellt, eine Oberflächenschicht 3 auf die Wand 10 (oder Teile davon) aufgetragen, so dass diese temporär an dieser haftet. Je nach Ausführungsform können auch mehrere Lagen von Oberflächenschichten aufgebracht werden. Die eine oder die mehreren Oberflächenschichten 3 können aus z.B. in ihrem Rohzustand aus einer Flüssigkeit und/oder einem Pulver und/oder einer Folie bestehen. In der Regel erreichen diese erst durch die Verarbeitung ihre gewünschten Eigenschaften. In einer Ausführungsform wird die Oberflächenschicht 3 vor dem Aufbringen einer ersten Faserlage durch das Einwirken von elektromagnetischen Wellen behandelt. Es ist insbesondere die Verwendung von Strahlung mit Wellenlängen im infraroten oder ultravioletten Bereich vorgesehen. Weitere Möglichkeiten bestehen in der Verwendung von Mikrowellen oder induktiver Erwärmung.

In einem weiteren Schritt (vgl. **Figur 1c**) wird eine erste Faserlage 4 auf die temporär an der Kavitätenwand 10 haftende Oberflächenschicht 3 aufgebracht. Es können dazu beispielsweise Kohlefasern, Glasfasern, Aramidfasern, Polymerfasern, Metallfasern (z.B. Stahlfasern) oder Naturfasern verwendet werden, welche durch die Oberflächenschicht 3 hindurch von aussen her ganz oder teilweise sichtbar sind. Das Aufbringen weiterer Faserlagen auf die erste Faserlage ist möglich. Anschliessend werden die Oberflächenschicht 3 und die mindestens eine erste Faserlager 4 miteinander wirkverbunden. Ausserdem werden die Oberflächenschicht und die erste Faserlage soweit ausgehärtet, dass zumindest die Kombination der beiden Schichten eine gewisse Eigensteifigkeit aufweist. Die Eigensteifigkeit sollte dabei so gross sein, dass das Zwischenprodukt eine einfache Handhabung zulässt.

Anschliessend werden, wie schematisch in **Figur 1d** dargestellt, das erste Teil 5 (Zwischenprodukt) bestehend aus der Oberflächenschicht 3 und der mit ihr wirkverbundenen Faserschicht 4 von der Kavitätenwand 10 abgetrennt und wie in **Figur 1e** dargestellt, aus der Kavität 2 entnommen. Es weist dabei mit Vorteil eine in etwa gleichbleibende, konstante Dicke auf. Die Dicke ist dabei im Vergleich zum Endprodukt relativ dünn und besteht im Wesentlichen nur aus der Oberflächenschicht und der Faserlage. Durch die geringe, uniforme Materialstärke können Kontrollverfahren vereinfacht angewendet werden, welche bei Bauteilen, welche z.B. Rippen und andere Verstärkungsstrukturen aufweisen nicht so einfach eingesetzt werden können.

Anschliessend kann das Zwischenprodukt 5, wie in **Figur 1f** dargestellt, z.B. auf optische Fehlstellen oder andere Kriterien untersucht werden. Die Kontrolle kann insbesondere folgende Verfahren umfassen: Visuelle Kontrolle, mechanische Kontrolle, Kontrolle der Faserverteilung, Kontrolle der Durchgängigkeit der Homogenität der Oberflächenschicht, usw.

In einem anschliessenden Schritt (vgl. **Figur 1g**) wird das Zwischenprodukt 5 in dieselbe oder eine Kavität 7 eines anderen Werkzeuges 11 eingebracht. In dieser zweiten Kavität 7 wird eine Trägerstruktur 8 mit dem ersten Teil (Zwischenprodukt) 5 wirkverbunden. Die Trägerstruktur kann z.B. aus ein oder mehrlagigem Faserverbundmaterial, spritzgegossenem Kunststoff, einer Schaum- oder Wabenstruktur oder einer Kombination davon bestehen. Die Trägerstruktur kann flach oder mit Verstärkungsrippen ausgestaltet sein. Sie kann direkt oder über eine Zwischenschicht mit dem ersten Teil wirkverbunden werden. Weitere Möglichkeiten bestehen darin, zwischen das erste Teil und die Trägerstruktur Teile einzulegen, welche eine besondere Funktion übernehmen. Z.B. besteht die Möglichkeit eine Kennzeichnung, z.B. ein aufgedruckter Code oder von aussen her auslesbare RFID-Tags, einzulegen, welche der Qualität- und Fälschungssicherheit und/oder zur Identifikation des Bauteils dienen.

Ein weiterer Vorteil besteht bei der Verwendung von mehreren Formwerkzeugen darin, dass diese optimal ausgelastet werden können. Z.B. können die Formwerkzeuge für die jeweiligen Verarbeitungsschritte auf optimalen Temperaturen isotherm betrieben werden. Ein langwieriges Aufheizen und Abkühlen entfällt.

**Figur 2** zeigt schematisch einen Querschnitt durch ein erfindungsgemässes Bauteil 9 mit faserverstärktem Kunststoff. Das Bauteil 9 weist eine äussere Oberflächenschicht 3 auf, hinter welcher eine Faserlage 4 angeordnet ist. Die Oberflächenschicht 3 und die Faserlage 2 werden gemeinsam hergestellt (erstes Teil 5) und können dann zur Qualitätskontrolle aus dem Formwerkzeug 1 (vgl. **Figur 1**) entnommen werden. In gewissen Anwendungsfällen kann die Oberflächenschicht 3 auch weggelassen werden oder zu einem späteren Zeitpunkt aufgebracht werden. Falls gewünscht kann die Qualitätskontrolle alternativ oder in Ergänzung auch im Formwerkzeug durchgeführt werden. In einem zweiten Schritt wird eine Trägerstruktur 8 mit dem ersten Teil 5 wirkverbunden. Die Wirkverbindung erfolgt einer hier schematisch als gestrichelte Linie 11 dargestellte Wirkverbindungsfläche 11. Bei der Trägerstruktur 8 kann es sich um eine oder mehrere Lagen von faserverstärktem Kunststoff und/oder um ein Schaumstoff und/oder Waben und/oder um eine Struktur aus thermoplastischem Kunststoff handeln. Um eine optimale Wirkverbindung zwischen dem ersten Teil 5 und der Trägerstruktur 8 zu erzielen, wird die Trägerstruktur 8 in der Regel auf der Wirkverbindungsfläche 11 aufgebaut. Die Trägerstruktur kann aus faserverstärktem Kunststoff ein oder mehrschichtig aufgebaut werden. Andere Konstruktionsarten sind möglich. Z.B. besteht die Möglichkeit, alternativ oder in Ergänzung die Trägerstruktur 8 durch Spritzgiessen herzustellen. Zu diesem Zweck kann das erste Teil 5 in die eine Spritzgiessform eingelegt werden. Beim gezeigten Beispiel weist die Trägerstruktur 8 Verstärkungsrippen 12 auf. Andere, die Tragfähigkeit erhöhende Elemente sind ebenfalls möglich. Mit Vorteil wird das erste Teil 5 als vergleichsweise flach ausgestaltet, d.h. mit einer geringen Dicke. Die aus der Ebene hervorstehenden, "dreidimensionalen" Elemente werden mit Vorteil in die Trägerstruktur 8 integriert.

### Bezugszeichenliste

- 1: erstes Formwerkzeug
- 2: erste Kavität
- 3: Oberflächenschicht
- 4: Faserlage
- 5: erstes Teil / Zwischenprodukt
- 6: zweites Formwerkzeug
- 7: zweite Kavität
- 8: Trägerstruktur
- 9: Bauteil
- 10: Wand (Kavitätenwand)
- 11: Wirkverbindungsfläche
- 12: Verstärkungsrippe

## Patentansprüche

1. Verfahren zur Herstellung eines faserverstärkten Bauteils (9) mit folgenden Verfahrensschritten:
a. Bereitstellen eines Formwerkzeugs (1) mit einer formgebenden Kavität (2);
b. Aufbringen einer Oberflächenschicht (3) auf mindestens eine Wand (10) der Kavität (2), so dass diese temporär an dieser haftet;
c. Aufbringen einer ein- oder mehrschichtigen Faserlage (4) auf die temporär an der Kavitätenwand (10) haftende Oberflächenschicht (3);
d. Wirkverbinden der Oberflächenschicht (3) und der Faserlage (4), sowie Aushärten der ersten Faserlage (4);
e. Ablösen der Oberflächenschicht (3) von der Kavitätenwand (10);
**gekennzeichnet durch**
f. Entnahme eines aus der Faserlage (4) und der damit wirkverbundenen Oberflächenschicht (3) bestehenden Zwischenprodukts (5) aus der Kavität (2);
g. Kontrolle des Zwischenprodukts (5);
h. Einbringen des kontrollierten Zwischenprodukts (5) in dieselbe oder eine andere Kavität (7);
i. Aufbringen einer Trägerstruktur (8) auf das Zwischenprodukt (5);
j. Wirkverbinden des Zwischenprodukts (5) mit der Trägerstruktur (8) zum Bauteil (9);
k. Entnahme des Bauteils (9) aus der Kavität (2, 7).

2. Verfahren gemäss Patentanspruch 1, **dadurch gekennzeichnet, dass** die Kavität (2) des verwendeten Formwerkzeugs über eine elektrisch leitende Oberfläche (10) verfügt, welche die temporäre Haftung der Oberflächenbeschichtung (3) verbessert.

3. Verfahren gemäss einem der vorangegangenen Patentansprüche, **dadurch gekennzeichnet, dass** die Oberflächenbeschichtung (3) mehrschichtig aufgebaut wird.

4. Verfahren gemäss Patentanspruch 3, **dadurch gekennzeichnet, dass** mindestens eine der in der Form applizierten Lagen der Oberflächenschicht (3) über eine andere Färbung als die erste Lage verfügt.

5. Verfahren gemäss einem der vorangegangenen Patentansprüche, **dadurch gekennzeichnet, dass** wenigstens eine Lage der Oberflächenschicht (3) vor dem Einbringen in die Kavität (2) ein Pulver ist.

6. Verfahren gemäss einem der vorangegangenen Patentansprüche, **dadurch gekennzeichnet, dass** wenigstens eine Lage der Oberflächenschicht (3) vor dem Einbringen in die Kavität (2) eine Flüssigkeit ist.

7. Verfahren gemäss einem der vorangegangenen Patentansprüche, **dadurch gekennzeichnet, dass** wenigstens eine Lage der Oberflächenschicht (3) nicht durchgehend ist.

8. Verfahren gemäss einem der vorangegangenen Patentansprüche, **dadurch gekennzeichnet, dass** der Aggregatzustand der Oberflächenschicht (3) vor dem Einlegen der ersten Faserlage (4) durch elektromagnetische Strahlung wenigstens zeitweise geändert wird.

9. Verfahren gemäss einem der vorangegangenen Patentansprüche, **dadurch gekennzeichnet, dass** die Oberflächenschicht (3) vor dem Einlegen der ersten Faserlage (4) zumindest teilweise ausgehärtet wird.

10. Verfahren gemäss einem der vorangegangenen Patentansprüche, **dadurch gekennzeichnet, dass** die Trägerstruktur (8) als Faserverbundbauteil aufgebaut wird.

11. Verfahren gemäss Patentanspruch 10, **dadurch gekennzeichnet, dass** die Trägerstruktur (8) aus einer oder mehreren Faserlagen besteht.

12. Verfahren gemäss einem der Patentansprüche 10 oder 11, **dadurch gekennzeichnet, dass** die Trägerstruktur (8) einen Schaumstoff und/oder eine Wabenstruktur umfasst.

13. Verfahren gemäss einem der vorangegangenen Patentansprüche, **dadurch gekennzeichnet, dass** die Trägerstruktur (8) zumindest einen Bereich aus homogenem Kunststoff umfasst.

14. Verfahren gemäss Patentanspruch 13, **dadurch gekennzeichnet, dass** die Trägerstruktur (8) zumindest bereichsweise durch Spritzgiessen hergestellt wird.

15. Verfahren gemäss einem der vorangehenden Patentansprüche, **dadurch gekennzeichnet, dass** die Trägerstruktur durch Verkleben mit dem Zwischenprodukt wirkverbunden wird.

16. Verfahren gemäss einem der vorangegangenen Patentansprüche, **dadurch gekennzeichnet, dass** die Oberflächenschicht von der Kavitätenwand abgelöst wird, indem ein Gas und/oder eine Flüssigkeit zwischen Oberflächenschicht und Kavitätenwand eingeleitet wird.

17. Verfahren gemäss einem der vorangegangenen Patentansprüche, **dadurch gekennzeichnet, dass** die Kontrolle eine direkte oder indirekte Sichtprüfung ist.

18. Verfahren gemäss einem der vorangegangenen Patentansprüche, **dadurch gekennzeichnet, dass** die erste Faserlage aus Kohlefasern und/oder Glasfasern und/oder Aramidfasern und/oder Polymerfasern und/oder Metallfasern und/oder Naturfasern und/oder Synthesefasern gebildet wird.

19. Verfahren gemäss einem der vorangehenden Patentansprüche, **dadurch gekennzeichnet, dass** eine oder mehrere Faserlagen durch Aushärten eines Matrixsystems fixiert werden, das zwischen die Fasern injiziert wird oder bereits dort vorhanden ist.

## Claims

1. Method for producing a fibre-reinforced component (9), including the following method steps:
a. providing a forming tool (1) having a shaping cavity (2);
b. applying a surface layer (3) to at least one wall (10) of the cavity (2) so that the surface layer adheres temporarily to the said wall;
c. applying a single-layer or multi-layer fibre layer (4) to the surface layer (3) adhering temporarily to the cavity wall (10) ;
d. interconnecting the surface layer (3) and the fibre layer (4), and curing the first fibre layer (4);
e. detaching the surface layer (3) from the cavity wall (10);
**characterized by**
f. extracting an intermediate product (5) consisting of the fibre layer (4) and the surface layer (3) interconnected thereto from the cavity (2);
g. inspecting the intermediate product (5);
h. introducing the inspected intermediate product (5) into the same or another cavity (7);
i. applying a carrier structure (8) to the intermediate product (5);
j. interconnecting the intermediate product (5) to the carrier structure (8) to form the component (9);
k. extracting the component (9) from the cavity (2, 7) .

2. Method according to claim 1, **characterized in that** the cavity (2) of the forming tool used comprises an electrically conductive surface (10), which improves the temporary adhesion of the surface coating (3) .

3. Method according to either of the preceding claims, **characterized in that** the surface coating (3) is built up in multiple layers.

4. Method according to claim 3, **characterized in that** at least one of the layers of the surface layer (3) applied in the mould has a different colouration than the first layer.

5. Method according to one of the preceding claims, **characterized in that** before the introduction into the cavity (2), at least one layer of the surface layer (3) is a powder.

6. Method according to one of the preceding claims, **characterized in that** before the introduction into the cavity (2), at least one layer of the surface layer (3) is a liquid.

7. Method according to one of the preceding claims, **characterized in that** at least one layer of the surface layer (3) is not continuous.

8. Method according to one of the preceding claims, **characterized in that** before the introduction of the first fibre layer (4), the aggregate state of the surface layer (3) is at least temporarily changed by electromagnetic radiation.

9. Method according to one of the preceding claims, **characterized in that** before the introduction of the first fibre layer (4), the surface layer (3) is at least partly cured.

10. Method according to one of the preceding claims, **characterized in that** the carrier structure (8) is built up as a fibre composite component.

11. Method according to claim 10, **characterized in that** the carrier structure (8) consists of one or more fibre layers.

12. Method according to claim 10 or 11, **characterized in that** the carrier structure (8) comprises a foam and/or a honeycomb structure.

13. Method according to one of the preceding claims, **characterized in that** the carrier structure (8) comprises at least one region of homogeneous plastic.

14. Method according to claim 13, **characterized in that** the carrier structure (8) is at least partly produced by injection moulding.

15. Method according to one of the preceding claims, **characterized in that** the carrier structure is interconnected to the intermediate product by adhesive bonding.

16. Method according to one of the preceding claims, **characterized in that** the surface layer is detached from the cavity wall by a gas and/or a liquid being fed in between the surface layer and the cavity wall.

17. Method according to one of the preceding claims, **characterized in that** the inspection is a direct or indirect visual check.

18. Method according to one of the preceding claims, **characterized in that** the first fibre layer is formed from carbon fibres and/or glass fibres and/or aramid fibres and/or polymer fibres and/or metal fibres and/or natural fibres and/or synthetic fibres.

19. Method according to one of the preceding claims, **characterized in that** one or more fibre layers are fixed by curing a matrix system, which is injected between the fibres or is already present there.

## Revendications

1. Procédé de fabrication d'un composant renforcé de fibres (9), présentant les étapes de procédé suivantes:
a. préparer un outil de moulage (1) avec une cavité de moulage (2);
b. appliquer une couche superficielle (3) sur au moins une paroi (10) de la cavité (2), de telle manière qu'elle adhère temporairement à celle-ci;
c. appliquer une couche de fibres (4) en une ou plusieurs couche (s) sur la couche superficielle (3) adhérant temporairement à la paroi (10) de la cavité;
d. relier mutuellement la couche superficielle (3) et la couche de fibres (4), et durcir la première couche de fibres (4);
e. détacher la couche superficielle (3) de la paroi (10) de la cavité,
**caractérisé par**:
f. enlever hors de la cavité (2) un produit intermédiaire (5) composé de la couche de fibres (4) et de la couche superficielle (3) reliée mutuellement à celle-ci;
g. contrôler le produit intermédiaire (5);
h. introduire le produit intermédiaire contrôlé (5) dans la même cavité ou dans une autre cavité (7);
i. appliquer une structure de support (8) sur le produit intermédiaire (5);
j. relier mutuellement le produit intermédiaire (5) à la structure de support (8) pour former le composant (9);
k. enlever le composant (9) hors de la cavité (2, 7).

2. Procédé selon la revendication 1, **caractérisé en ce que** la cavité (2) de l'outil de moulage utilisé comporte une surface électriquement conductrice (10), qui améliore l'adhérence temporaire du revêtement superficiel (3).

3. Procédé selon l'une quelconque des revendications précédentes, **caractérisé en ce que** le revêtement superficiel (3) est fabriqué en plusieurs couches.

4. Procédé selon la revendication 3, **caractérisé en ce qu'**au moins une des couches de la couche superficielle (3) appliquées dans le moule dispose d'une autre coloration que la première couche.

5. Procédé selon l'une quelconque des revendications précédentes, **caractérisé en ce qu'**au moins une couche de la couche superficielle (3) est une poudre avant l'introduction dans la cavité (2).

6. Procédé selon l'une quelconque des revendications précédentes, **caractérisé en ce qu'**au moins une couche de la couche superficielle (3) est un liquide avant l'introduction dans la cavité (2).

7. Procédé selon l'une quelconque des revendications précédentes, **caractérisé en ce qu'**au moins une couche de la couche superficielle (3) n'est pas continue.

8. Procédé selon l'une quelconque des revendications précédentes, **caractérisé en ce que** l'état d'agrégation de la couche superficielle (3) est changé au moins temporairement au moyen d'un rayonnement électromagnétique avant la mise en place de la première couche de fibres (4) .

9. Procédé selon l'une quelconque des revendications précédentes, **caractérisé en ce que** la couche superficielle (3) est durcie au moins temporairement avant la mise en place de la première couche de fibres (4) .

10. Procédé selon l'une quelconque des revendications précédentes, **caractérisé en ce que** la structure de support (8) est construite en forme d'un composant composite de fibres.

11. Procédé selon la revendication 10, **caractérisé en ce que** la structure de support (8) se compose d'une ou de plusieurs couche(s) de fibres.

12. Procédé selon une des revendications 10 ou 11, **caractérisé en ce que** la structure de support (8) comprend une substance en mousse et/ou une structure alvéolaire.

13. Procédé selon l'une quelconque des revendications précédentes, **caractérisé en ce que** la structure de support (8) comprend au moins une région en matière plastique homogène.

14. Procédé selon la revendication 13, **caractérisé en ce que** la structure de support (8) est fabriquée au moins en partie par moulage par injection.

15. Procédé selon l'une quelconque des revendications précédentes, **caractérisé en ce que** la structure de support est reliée mutuellement au produit intermédiaire par collage.

16. Procédé selon l'une quelconque des revendications précédentes, **caractérisé en ce que** la couche superficielle est détachée de la paroi de la cavité, en introduisant un gaz et/ou un liquide entre la couche superficielle et la paroi de la cavité.

17. Procédé selon l'une quelconque des revendications précédentes, **caractérisé en ce que** le contrôle est une inspection visuelle directe ou indirecte.

18. Procédé selon l'une quelconque des revendications précédentes, **caractérisé en ce que** la première couche de fibres est formée à partir de fibres de carbone et/ou de fibres de verre et/ou de fibres d'aramide et/ou de fibres polymères et/ou de fibres métalliques et/ou de fibres naturelles et/ou de fibres synthétiques.

19. Procédé selon l'une quelconque des revendications précédentes, **caractérisé en ce qu'**une ou plusieurs couche(s) de fibres sont fixées par durcissement d'un système de matrice injecté entre les fibres ou qui y est déjà présent.
